# EUROPEAN PATENT APPLICATION

(11) **EP 3 199 328 A1**
(43) Date of publication of application: **02.08.2017**
(21) Application number: 17152704.7
(22) Date of filing: 23.01.2017
(51) Int. Cl.: B29C 67/00, B33Y 30/00, B22F 3/105, F16C 29/00, F16C 29/12

(54) **THREE-DIMENSIONAL PRINTER WITH PLATFORM LIFTING MECHANISM**

(30) Priority: 27.01.2016 CN 201610054536
(71) Applicant: XYZprinting, Inc., New Taipei City 22201 (TW); Kinpo Electronics, Inc., New Taipei City 22201 (TW)
(72) Inventor: DING, Ming-Hsiung, 22201 Shenkeng Dist., New Taipei City (TW); SUNG, Chuan-Rung, 22201 Shenkeng Dist., New Taipei City (TW); YEN, Chao-Yu, 22201 Shenkeng Dist., New Taipei City (TW)
(74) Representative: 2K Patentanwälte Blasberg Kewitz & Reichel

(57) **Abstract**

A three-dimensional printer (100) includes a platform (20), a lifting mechanism (10) and a carrying base (30), wherein the lifting mechanism (10) includes a vertical screw (1), a linear sliding rail (2), a movable component (3), a stand (4) and a pair of limiting members (5). The linear sliding rail (2) is arranged with the vertical screw (1) in parallel. One end of the movable component (3) is disposed with an inner screw hole (31) while the other end has a guide portion (32). The guide portion (32) is vertically connected to the linear sliding rail (2) in a slidable manner. The stand (4) is disposed on the horizontal two sides of the movable component (3). The pair of limiting members (5) is respectively sandwiched between the two sides of the movable component (3) and the stand (4). One end of each limiting member (5) is fixed to the movable component (3) while the other end has a sliding portion (51). Each sliding portion (51) abuts on the stand (4).

## Description

### BACKGROUND OF THE INVENTION

### FIELD OF THE INVENTION

The disclosure relates to a printing device, more particularly to a three-dimensional printer.

### DESCRIPTION OF THE RELATED ART

Three-dimensional printing is a rapid prototyping technology which utilizes bondable materials such as powdered metal or plastics to form an object by stacking them layer by layer, namely laminated manufacturing. Currently, components of toys, mechanical parts or human bones can be manufactured rapidly by three-dimensional printing. This makes three-dimensional printing popular to the public.

The Z axis of a three-dimensional printer usually needs to sustain the weight of the whole platform so the screw is used for this purpose. The screw, however, is difficult to align with the motor, which leads to poor concentricity. When the axis of the motor does not align with the axis of the screw, the screw may shake and this results in zigzag stripes on the product.

Accordingly, the disclosure aims to provide an improved design for solving aforementioned problems.

### SUMMARY OF THE INVENTION

The disclosure provides a three-dimensional printer in which the linear sliding rail limits the front and rear movement of the movable component. Furthermore, the limiting member limits the left and right movement of the movable component. As a result, the movable component can be lifted stably towards the axial direction of the vertical screw without deflection so the lifting mechanism can move along a straight direction stably.

In the embodiments of the disclosure, a three-dimensional printer is provided. The three-dimensional printer comprises a platform, a lifting mechanism fixed to the platform and a carrying base fixed to the movable component. The platform has a material tank. The lifting mechanism comprises a vertical screw, a linear sliding rail, a movable component, a stand and a pair of limiting members. The linear sliding rail is arranged with the vertical screw in parallel. One end of the movable component is disposed with an inner screw hole while the other end has a guide portion. The inner screw hole is screwed to the vertical screw. The guide portion is vertically connected to the linear sliding rail in a slidable manner, so that the movable component is able to be screwed to and mutually drive the vertical screw. The stand is disposed on the horizontal two sides of the movable component. The pair of limiting members is respectively sandwiched between the two sides of the movable component and the stand. One end of each limiting member is fixed to the movable component while the other end has a sliding portion. Each sliding portion abuts on the stand. The carrying base is fixed to the movable component. The carrying base is capable of following the movable component to move towards or to move away from the material tank.

### BRIEF DESCRIPTION OF THE DRAWINGS

The disclosure will become more fully understood from the detailed description and the drawings given herein below are for illustration only, and thus do not limit the disclosure, wherein:
FIG. 1 is a schematic view of the assembly of the three-dimensional printer according to the disclosure;
FIG. 2 is a perspective view of the assembly of the lifting mechanism according to the first embodiment of the disclosure;
FIG. 3 is a partial sectional view of the lifting mechanism according to the first embodiment of the disclosure;
FIG. 4 is a partial sectional view of the lifting mechanism according to the second embodiment of the disclosure;
FIG. 5 is a partial sectional view of the lifting mechanism according to the third embodiment of the disclosure; and
FIG. 6 is a partial sectional view of the lifting mechanism according to the fourth embodiment of the disclosure.

### DETAILED DESCRIPTION OF THE INVENTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

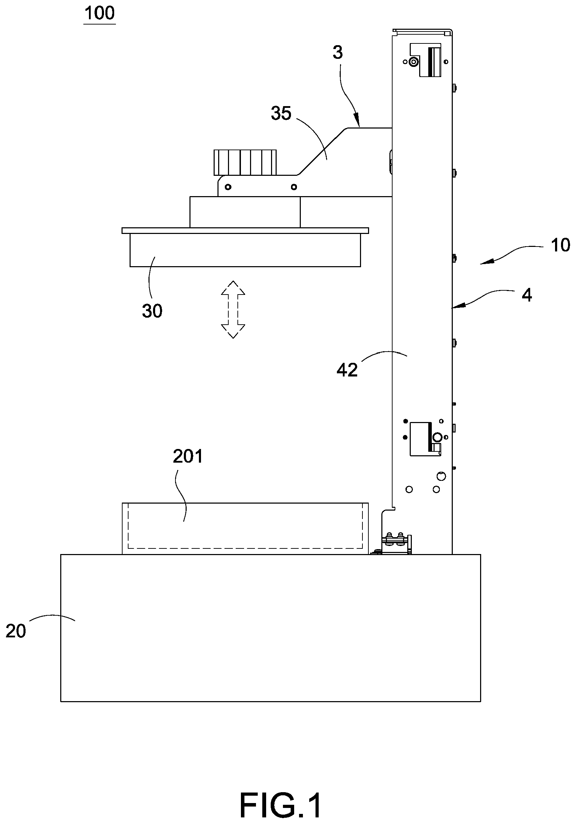

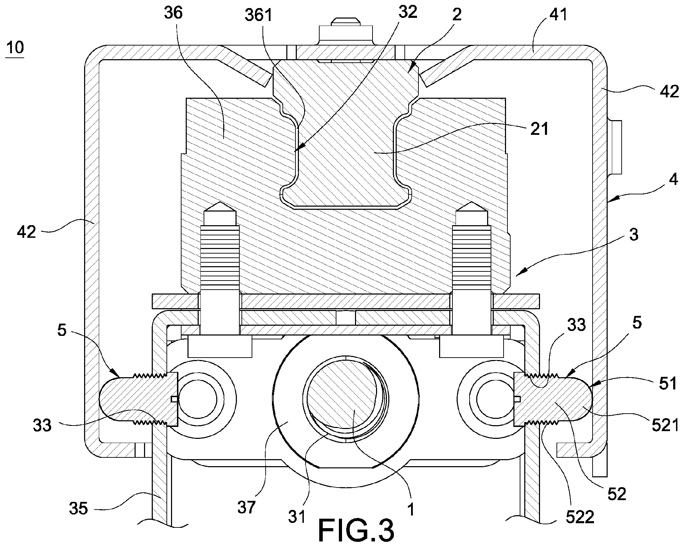

Referring to FIG. 1 to FIG. 3, the disclosure provides a three-dimensional printer 100 mainly comprises a platform 20, a lifting mechanism 10 and a carrying base 30.

As seen in FIG. 1 to FIG. 3, the platform 20 has a material tank 201. The lifting mechanism 10 mainly comprises a vertical screw 1, a linear sliding rail 2, a movable component 3, a stand 4 and a pair of limiting member 5. The lifting mechanism 10 is fixed to the platform 20. The carrying base 30 is fixed to the movable component 3 and is able to move towards or move away from the material tank 201, along with the movable component 3.

The linear sliding rail 2 is arranged with the vertical screw 1 in parallel. The linear sliding rail 2 is a vertical rib 21, which indicates the vertical rib 21 is arranged with the vertical screw 1 in parallel.

One end of the movable component 3 is disposed with an inner screw hole 31 while the other end has a guide portion 32. The inner screw hole 31 is screwed to the vertical screw 1. The guide portion 32 is vertically connected to the linear sliding rail 2 in a slidable manner so that the movable component 3 is able to be screwed to and drive the vertical screw 1. That is, the rotation of the vertical screw 1 can drive the movable component 3 to move towards the axial direction of the vertical screw 1.

Specifically, two sides of the movable component 3 are respectively disposed with a screwing hole 33. The movable component 3 comprises a support stand 35, a sliding block 36 and a nut 37. The support stand 35 and the sliding block 36 are fixed to each other. The guide portion 32 comprises a sliding groove 361 formed on the sliding block. The sliding groove 361 and the vertical rib 21 are mounted together in a slidable manner. The nut 37 is fixed to the support stand 35. The inner screw hole is formed inside the nut 37. The screwing holes 33 are formed on the two sides of the support stand 35.

The stand 4 is disposed on horizontal two sides of the movable component 3. The stand 4 has a bottom plate 41 and two lateral plates 42 extending from two sides of the bottom plate 41. The vertical rib 21 is fixed to the bottom plate 41.

Each limiting member 5 is sandwiched between the two sides of the movable component 3 and the stand 4, respectively. One end of each limiting member 5 is fixed to the movable component 3 while the other end has a sliding portion 51. Each sliding portion 51 abuts on each lateral plate 42 of the stand 4.

Furthermore, in the first embodiment of the disclosure, each limiting member 5 is a sliding stick 52. Each sliding portion 51 is a curved block 521 extending from the sliding stick 52 towards the stand 4. The outer edge of each sliding stick 52 is disposed with an external thread 522. Each external thread 522 and each screwing hole 33 are screwed to each other such that each sliding stick 52 is fixed to the two sides of the movable component 3.

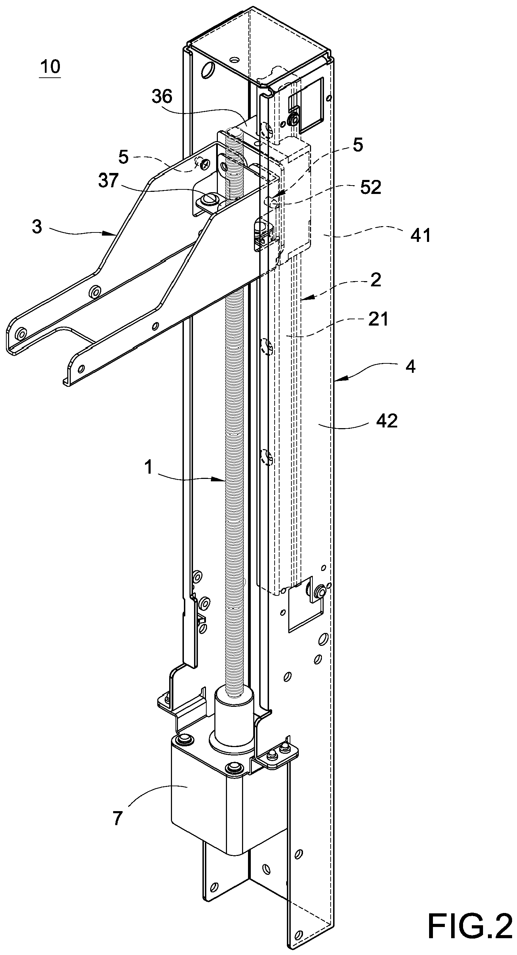

As seen in FIG. 2, the lifting mechanism 10 of the disclosure further comprises a motor 7 installed on the stand 4. One end of the vertical screw 1 is connected to the motor and rotates along with it while the other end is screwed to the inner screw hole 31.

As shown in FIG. 1 to FIG. 3, in the assembly of the three-dimensional printer 100 of the disclosure, the platform 20 has a material tank 201; the lifting mechanism 10 is fixed to the platform 20, and the linear sliding rail 2 is arranged with the vertical screw 1 in parallel; one end of the movable component 3 is disposed with an inner screw hole 31 while the other end has a guide portion 32, the inner screw hole 31 is screwed to the vertical screw 1, and the guide portion 32 is vertically connected to the linear sliding rail 2 in a slidable manner so that the movable component 3 is able to be screwed to and drive the vertical screw 1; the stand 4 is disposed on horizontal two sides of the movable component 3; the pair of limiting members 5 are sandwiched between the two sides of the movable component 3 and the stand 4, respectively, one end of each limiting member 5 is fixed to the movable component 3 while the other end has a sliding portion 51, and each sliding portion 51 abuts on each lateral plate 42 of the stand 4; the carrying base 30 is fixed to the movable component 3 and is able to move towards or move away from the material tank 201, along with the movable component 3. Thereby, the linear sliding rail 2 limits the front and rear movement of the movable component 3 while the limiting member 5 limits the left and right movement of the movable component 3. As a result, the movable component 3 can be lifted stably towards the axial direction of the vertical screw 1 without deflection so the lifting mechanism 10 can move along a straight direction stably.

As shown in FIG. 1 to FIG. 3, in the operation state of the three-dimensional printer 100 of the disclosure, the motor 7 drives the vertical screw 1 to rotate. The rotation of the vertical screw drives the movable component 3 to move towards the axial direction of the vertical screw. Since the linear sliding rail 2 limits the front and rear movement of the movable component 3 and the limiting member 5 limits the left and right movement of the movable component 3, the movable component 3 can be lifted stably towards the axial direction of the vertical screw 1 without deflection. Hence, the lifting mechanism 10 can move along a straight direction stably. When the carrying base 30, along with the movable component 3, moves towards or away from the material tank 201, the carrying base 30 can be stable and does not deflect. This avoids the horizontal zigzag stripe on the product of three-dimensional printing which sits on the carrying base 30.

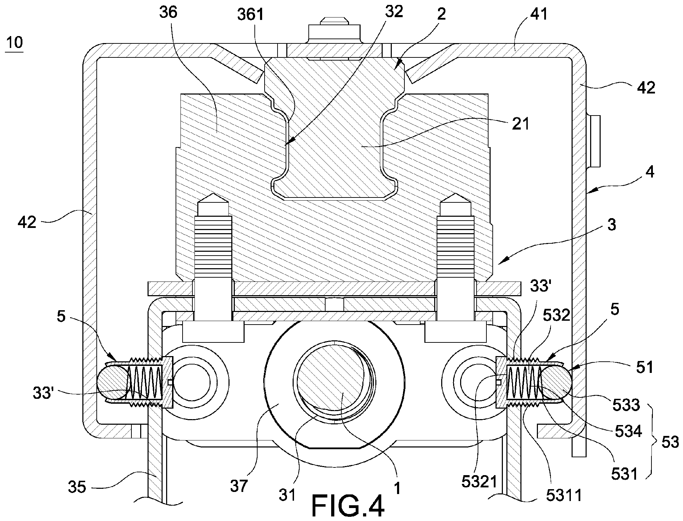

FIG. 4 shows the lifting mechanism 10 according to the second embodiment of the disclosure. The second embodiment is similar to the first embodiment but the structure of the limiting member 5 is different from the first embodiment.

Specifically, each limiting member 5 is a ball member 53. Each ball member 53 comprises a cover 531. One end of each cover 531 is fixed to the movable component 3 while the other end is disposed with a groove 532. Each sliding portion 51 is a ball 533 accommodated in the groove 532 and a part of the ball 533 is exposed on the cover 531, thereby achieving the same effect of the first embodiment.

Moreover, two sides of the movable component 3 are respectively disposed with a screwing hole 33'. The outer edge of each cover 531 is disposed with an external thread 5311. Each external thread 5311 and each screwing hole 33' are screwed to each other so that each cover 531 is fixed to the two sides of the movable component 3.

Each ball member 53 further comprises a spring 534 and the groove 532 has a bottom surface 5321. Each spring 534 is sandwiched between the bottom surface 5321 and the ball 533 so the spring 534 can push the ball 533 to abut on the stand 4 reliably. This enables the ball member 53 to be adjustable based on the distance between the movable component 3 and the stand 4. Therefore, the gap between the movable component 3 and the stand 4, which makes the sliding portion 51 unable to abut on the stand 4 and results in shaking or deflection of the movable component 3, is avoided. Consequently, the capability of the linear movement of the lifting mechanism 10 is improved.

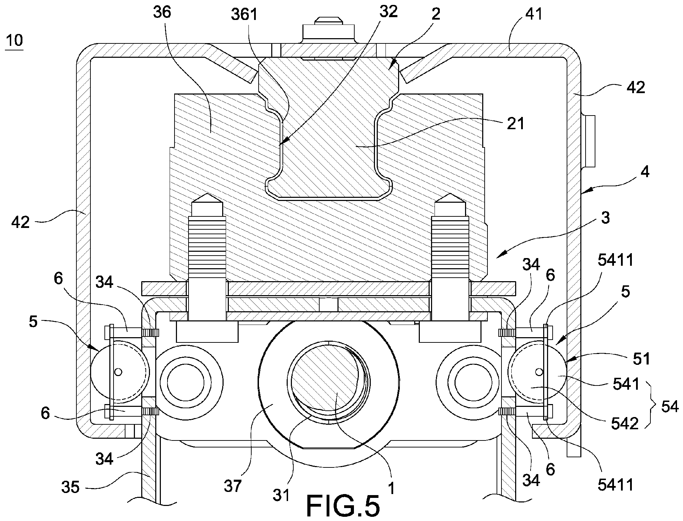

FIG. 5 shows the lifting mechanism 10 according to the third embodiment of the disclosure. The third embodiment is similar to the first embodiment but the structure of the limiting member 5 is different from the first embodiment.

Specifically, each limiting member 5 is a pulley 54. Each pulley 54 comprises a carrying base 541. Each carrying base 541 is fixed to the movable component 3. Each sliding portion 51 is a roller 542 installed on the end of the carrying base 541. Thereby, the same effect of the first embodiment can be achieved.

Moreover, the lifting mechanism 10 of the disclosure further comprises a plurality of locking members 6. Two sides of the movable component 3 are disposed with a plurality of first screwing holes 34 respectively. Each carrying base 541 is disposed with a plurality of second screwing holes 5411. Each locking member 6 goes through and is fixed to each first screwing hole 34 and each second screwing hole 5411 so that each pulley 54 is fixed to the two sides of the movable component 3.

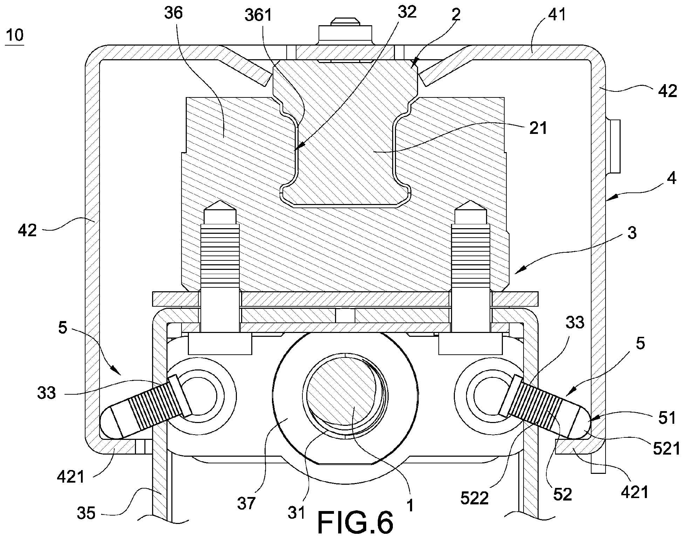

FIG. 6 shows the lifting mechanism 10 according to the fourth embodiment of the disclosure. The fourth embodiment is similar to the first embodiment but the position of the limiting member 5 abutting on the stand 4 different from the first embodiment.

Specifically, the end of each lateral plate 42 extends and forms an L-shaped fastening block 421. Each sliding portion 51 abuts on the inner side of each L-shaped fastening block 421 so the L-shaped fastening block 421 limits the horizontal movement of the sliding portion 51. This prevents the sliding portion 51 from shaking and deflection, thereby making the movable component 3 unable to shake or deflect. Thus, the capability of stable linear movement of the lifting mechanism 10 is improved.

## Claims

1. A three-dimensional printer (100), comprising:
a platform (20) having a material tank (201);
a lifting mechanism (10) fixed to the platform (20), the lifting mechanism (10) comprising:
a vertical screw (1);
a linear sliding rail (2) arranged with the vertical screw (1) in parallel;
a movable component (3), wherein one end thereof is disposed with an inner screw hole (31), the other end has a guide portion (32), the inner screw hole (31) is screwed to the vertical screw (1), the guide portion (32) is vertically connected to the linear sliding rail (2) in a slidable manner, so that the movable component (3) is able to be screwed to and mutually drive the vertical screw (1);
a stand (4) disposed on two horizontal sides of the movable component (3); and
a pair of limiting members (5) respectively sandwiched between the two horizontal sides of the movable component (3) and the stand (4), wherein one end of each limiting member (5) is fixed to the movable component (3) while the other end has a sliding portion (51), each sliding portion (51) abuts on the stand (4); and
a carrying base (30) fixed to the movable component (3), the carrying base (30) being capable of following the movable component (3) to move towards or to move away from the material tank (201).

2. The three-dimensional printer (100) according to claim 1, wherein each limiting member (5) is a sliding stick (52), and each sliding portion (51) is a curved block (521) extending from the sliding stick (52) towards the stand (4).

3. The three-dimensional printer (100) according to claim 2, wherein the two horizontal sides of the movable component (3) are respectively disposed with a screwing hole (33), the outer edge of each sliding stick (52) is disposed with an external thread (522), and each external thread (522) is screwed to each screwing hole (33).

4. The three-dimensional printer (100) according to one of the preceding claims, wherein each limiting member (5) is a ball member (53), each ball member (53) comprises a cover (531), one end of each cover (531) is fixed to the movable component (3) while the other end is disposed with a groove (532), each sliding portion (51) is a ball (533) accommodated in the groove (532) and a part of the ball (533) is exposed on the cover (531).

5. The three-dimensional printer (100) according to claim 4, wherein each ball member (53) further comprises a spring (534), the groove (532) has a bottom surface (5321), each spring (534) is sandwiched between the bottom surface (5321) and the ball (533).

6. The three-dimensional printer (100) according to claim 4 or 5, wherein two horizontal sides of the movable component (3) are respectively disposed with a screwing hole (33'), an outer edge of each cover (531) is disposed with an external thread (5311), and each external thread (5311) is screwed to each screwing hole (33').

7. The three-dimensional printer (100) according to one of the preceding claims, wherein each limiting member (5) is a pulley (54), each pulley (54) comprises a carrying base (541), each carrying base (541) is fixed to the movable component (3), each sliding portion (51) is a roller (542) installed on an end of the carrying base (541).

8. The three-dimensional printer (100) according to claim 7, further comprising a plurality of locking members (6), two sides of the movable component (3) are respectively disposed with a plurality of first screwing holes (34), each carrying base (541) is disposed with a plurality of second screwing holes (5411), each locking member (6) goes through and is fixed to each first screwing hole (34) and each second screwing hole (5411).

9. The three-dimensional printer (100) according to one of the preceding claims, wherein the stand (4) has a bottom plate (41) and two lateral plates (42) extending from two sides of the bottom plate (41), each sliding portion (51) abuts on each lateral plate (42), the linear sliding rail (2) is a vertical rib (21) and the vertical rib (21) is fixed to the bottom plate (41).

10. The three-dimensional printer (100) according to claim 9, wherein an end of each lateral plate (42) extends and forms an L-shaped fastening block (421), and each sliding portion (51) abuts on an inner side of each L-shaped fastening block (421).

11. The three-dimensional printer (100) according to claim 9 or 10, wherein the movable component (3) comprises a support stand (35), a sliding block (36) and a nut (37), the support stand (35) and the sliding block (36) are fixed to each other, the guide portion (32) comprises a sliding groove (361) formed on the sliding block (36), the sliding groove (361) and the vertical rib (21) are mounted together in a slidable manner, the nut (37) is fixed to the support stand (35) and the inner screw hole (31) is formed inside the nut (37).

12. The three-dimensional printer (100) according to claim 11, further comprising a motor (7) installed on the stand (4), wherein one end of the vertical screw (1) is connected to the motor (7) and rotates along with the motor (7) while the other end is screwed to the inner screw hole (31).
